# EUROPEAN PATENT APPLICATION

(11) **EP 2 423 835 A1**
(43) Date of publication of application: **29.02.2012**
(21) Application number: 11178655.4
(22) Date of filing: 24.08.2011
(51) Int. Cl.: G06F 17/30

(54) **Method of providing search service to extract keywords in specific region and display apparatus applying the same**

(30) Priority: 31.08.2010 KR 20100085098
(71) Applicant: SAMSUNG ELECTRONICS CO., LTD., Suwon-si Gyeonggi-do 442-742 (KR)
(72) Inventor: Chung, Ji-hye, Seoul (KR); Lee, Bo-ra, Seoul (KR); Kim, Yong-deok, Gyeonggi-do (KR); Lee, Hye-jong, Seoul (KR)
(74) Representative: Clark, David James

(57) **Abstract**

**Method of providing search service to extract keywords in specific region and display apparatus applying the same**

A method of providing a search service and a display device applying the method are provided. The method of providing a search service includes selecting a specific region of a screen, extracting a keyword using the selected specific region, and searching for information using the extracted keyword.

## Description

### BACKGROUND

### 1. Field

Methods and apparatuses consistent with exemplary embodiments relate to a method of providing a search service and a display apparatus applying the same, and more particularly, to a method of providing an Internet search service in a display apparatus and the display apparatus applying the same.

### 2. Description of the Related Art

Techniques for providing various services through the Internet have been applied to televisions which receive broadcasting. For example, Internet protocol televisions (IPTVs) can be connected to execute applications such as a widget, or the like.

At this time, the TVs can mount a web browser itself to provide an Internet service. In this case, a user has to execute the web browser by pressing a specific button of a remote controller for a web browser connection or by a menu.

However, in the case of using the Internet through the television, it is impossible to concentrate on a TV screen, since the Internet web browser covers the TV screen. Moreover, since the TV has an insufficient user interface required for using the Internet web browser, the user may feel uncomfortable when using the web browser through the TV.

In particular, since it is difficult for the user to input characters using a TV remote controller, keyword input and Internet searching using the TV becomes very inconvenient for the user. The user wants a display apparatus capable of more easily using a search service via the web browser. Accordingly, there is a need for a method of making keyword input and searching easier for a user.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a method of providing a search service and a display apparatus applying the same, which selects a specific region of a screen, extracts a keyword using the selected specific region, and searches for information based on the extracted keyword.

According to an aspect of an exemplary embodiment, there is provided a method of providing a search service. The method may include: selecting a specific region of a screen, extracting a keyword using the selected specific region, and searching for information based on the extracted keyword.

The extracting may include extracting a plurality of keywords using the selected specific region and the searching may include searching for the information based on a selected keyword of the plurality of keywords.

The extracting may include extracting a plurality of keywords using the selected specific region and the searching may include automatically selecting a specific keyword of the plurality of keywords and searching for the information based on the selected specific keyword.

The selecting may include selecting an entirety of the screen as the specific region. Alternatively, the selecting may include selecting a partial region of the screen as the specific region according to user manipulation.

The method may further include displaying a webpage screen, and the extracting may include extracting the keyword based on webpage content of the webpage screen included in the selected specific region.

Alternatively, the extracting may include extracting a text in a webpage included in the selected specific region and extracting the keyword using the extracted text.

The method may further include displaying an image, and the extracting may include extracting the keyword based on information of the image being displayed.

The extracting may include extracting title information of the image as the keyword. Alternatively, the searching may include transmitting a search query to a search engine server using the extracted keyword, receiving search result list information from the search engine server, and displaying the search result list information on the screen.

According to an aspect of another exemplary embodiment, there is provided a display apparatus. The display apparatus may include: a communication unit which is connected to an external server which provides a search service, and a controller which selects a specific region of a screen of the display device, extracts a keyword using the selected specific region, and searches for information via the communication unit based on the extracted keyword.

The controller may extract a plurality of keywords using the selected specific region, and may search for the information based on a selected keyword of the plurality of keywords. Alternatively, the controller may extract a plurality of keywords using the selected specific region, automatically select a specific keyword of the plurality of keywords, and search for the information based on the selected specific keyword.

The controller may select an entirety of the screen as the specific region.

Alternatively, the controller may select a partial region of the screen according to user manipulation as the specific region.

The controller may control to display a webpage screen and extract the keyword based on webpage content of the webpage screen included in the selected specific region. Alternatively, the controller may extract a text in a webpage included in the selected specific region and extract the keyword using the extracted text.

The controller may control to display an image and extract the keyword based on information of the image being displayed.

In addition, the controller may extract title information of the image as the keyword.

The controller may transmit a search query to a search engine server using the extracted keyword, receive search result list information from the search engine server, and display the search result list information on the screen.

As described above, according to the exemplary embodiments, the method of providing a search service and the display apparatus applying the same which select a specific region of a screen, extract a keyword based on the selected specific region, and search information based on the extracted keyword can be provided so that the display apparatus can input the keyword through the region selection. Accordingly, a user can input the desired search keyword by only having to input manipulation for the region selection.

According to the present invention there is provided an apparatus and method as set forth in the appended claims. Other features of the invention will be apparent from the dependent claims, and the description which follows. Additional aspects and advantages of the exemplary embodiments will be set forth in the detailed description, will be apparent from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:
FIG. 1 is a block diagram illustrating a configuration of a television (TV) according to an exemplary embodiment;
FIG. 2 is a flow chart illustrating a method of providing a search service according to an exemplary embodiment;
FIGS. 3A to 3D are views illustrating an extracted keyword indicated in a search keyword input region according to an exemplary embodiment;
FIGS. 4A and 4B are views illustrating a case where title information of an image being displayed is extracted as a keyword according to an exemplary embodiment;
FIGS. 5A to 5D are views illustrating a process of selecting a partial region of a screen using a touch manipulation according to an exemplary embodiment;
FIGS. 6A to 6D are views illustrating a process of selecting a partial region of a screen using a touch and drag touch manipulation according to an exemplary embodiment;
FIGS. 7A to 7D are views illustrating various cases where the entirety or a partial region of a screen is selected as a specific region according to an exemplary embodiment;
FIG. 8 is a view illustrating a case where an association recommendation keyword list associated with a word displayed on a screen is indicated according to an exemplary embodiment; and
FIGS. 9A and 9B are views illustrating a case where a keyword is displayed on a screen according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

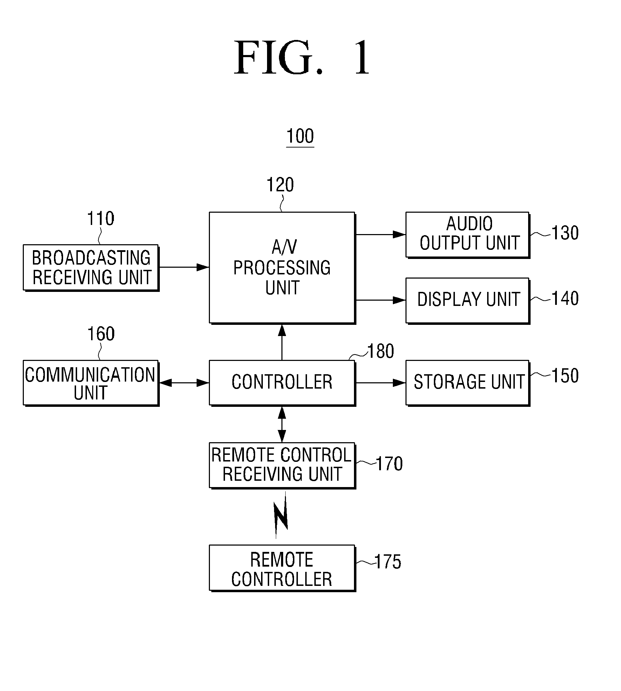

FIG. 1 is a block diagram illustrating a detailed configuration of a TV 100 according to an exemplary embodiment. As illustrated in FIG. 1, the TV 100 includes a broadcasting receiving unit 110, an audio/video (A/V) processing unit 120, an audio output unit 130, a display unit 140, a storage unit 150, a communication unit 160, a remote control receiving unit 170, and a controller 180.

The broadcasting receiving unit 110 receives a broadcasting signal from a broadcasting station or a satellite by a cable or radio and demodulates the received broadcasting signal. In addition, the broadcasting receiving unit 110 may receive broadcasting information.

The broadcasting receiving unit 110 divides the received broadcasting signal into a video signal and an audio signal. The broadcasting receiving unit 110 transmits the video signal and the audio signal to the A/V processing unit 120.

The A/V processing unit 120 performs signal-processing, such as video decoding, video scaling, audio decoding, and the like, in relation to the video signal and the audio signal input from the broadcasting receiving unit 110. In addition, the A/V processing unit 120 outputs the video signal to the display unit 140 and outputs the audio signal to the audio output unit 130. The audio output unit 130 outputs the audio signal output from the A/V processing unit 120 via a speaker (not shown) or an external unit (for example, an external speaker, not shown) connected through an external output terminal.

The display unit 140 displays the video signal output from the A/V processing unit 120. That is, the display unit 140 displays the broadcasting video image corresponding to the broadcasting signal.

The display unit 140 may display a search window in a partial region of a screen. Herein, the search window corresponds to a window provided to simply perform an Internet information search. That is, the search window corresponds to a window displayed by an application which performs an Internet search based on an input keyword. The search window functions to search for information searchable through various Internet sites and the Internet and indicates a search result.

The search window includes a search keyword input region in which a search keyword is input by a user and a search result indication region for indicating the search result. In addition, a keyword list may be additionally indicated in the search window. Herein, the keyword list corresponds to a list in which the keywords extracted in a selected specific region by a user's manipulation are listed.

The storage unit 150 stores various programs for TV operation. In addition, the storage unit 150 may store a recorded video image file. The storage unit 150 may include a hard disc, a nonvolatile memory, and the like.

The communication unit 160 communicably connects the TV 100 to a communication network such as the Internet, or the like. More specially, the communication unit 160 is connected to a search engine server which provides the Internet search service through the communication network, such as the Internet. The communication unit 160 transmits an input keyword to the search engine server and receives search results corresponding to the keyword from the search engine server.

The remote control receiving unit 170 receives a command from a remote controller 175 and transmits the received command to a controller 180. More specifically, the remote control receiving unit 170 receives a user's manipulation for changing a size of the search window from the remote controller 175.

The controller 180 understands the user's command based on the user's manipulation content transmitted from the remote controller 175 and controls overall operation of the TV 100 according to the user's command.

More specifically, the controller 180 selects a specific region in a partial region of the screen according to the user's manipulation. Herein, the specific region denotes a screen region which is a target of a keyword extraction. For example, if a specific point of the screen is selected by a user, the controller 180 may select a region having a preset area including the corresponding point as the specific region. The controller 180 selects the specific region according to a user's various manipulations. In addition, the controller 180 may select the entirety of the screen as the specific region.

The controller 180 extracts a keyword using the selected specific region. The controller 180 extracts the keyword using the selected specific region via various methods and algorithms.

More specifically, when the TV 100 is currently displaying video contents, the controller 180 image-processes the video image being displayed in the selected specific region to extract information corresponding to the processed video image. For example, in the case where the video image being displayed in the selected specific region is a face of a person, the controller 180 recognizes the face of the person included in the specific region using a face recognition method. The controller 180 extracts a name, affiliation, or the like of the corresponding person as the keyword. For example, in the case where the face included in the specific region is the face of 'Park Jisung', the controller 180 extracts 'Park Jisung', 'Manchester United', 'Korea', and the like as the key word.

Alternatively, in the case where the TV 100 is displaying video contents at present, the controller 180 may extract the keyword based on information of an image being displayed. For example, the TV 100 may extract a title of the image currently being displayed as the keyword. In the case where the TV 100 is currently displaying a webpage screen, the controller 180 extracts the keyword based on webpage contents of the webpage screen included in the selected region.

More specifically, in the case where text content of a webpage is included in the selected specific region, the controller 180 extracts a text of the webpage within the selected specific region and extracts the keyword using the extracted text. For example, the controller 180 may select a word which is repeated frequently, a word indicated by a bolded character, or a word indicated by a large character out of the extracted text as the keyword.

Alternatively, in the case where an image of a webpage is included in the selected specific region, the controller 180 processes the image of the webpage within the selected specific region to extract information associated with the image and extracts the keyword using the extracted image-associated information.

The controller 180 searches for information based on a keyword of extracted plurality of keywords selected by a user. In this case, the controller 180 displays a keyword list on the screen for a user to select the keyword.

At this time, the controller 180 extends a keyword input region of the search window to display the keyword list. More specifically, the keyword list may be displayed in a type that the keyword input region is extended in an upward direction. In addition, the controller 180 controls to display the list for the plurality of keywords in the periphery of a region in which the specific manipulation is input.

Thus, if a user's desired keyword is selected from the indicated keyword list, the controller 180 performs a search using the selected keyword.

In addition, the controller 180 automatically selects a specific keyword of the extracted plurality of keywords and searches for information based on the selected specific keyword. In the case where the keyword is automatically selected, the controller 180 selects the keyword based on a specific standard. For example, the controller 180 may select the keyword which has top keyword priority.

The controller 180 searches for information via the communication unit 160 using the extracted and selected keyword. More specifically, the controller 180 transmits a search query to a search engine server using the extracted keyword. Then, the controller 180 receives search result list information from the search engine server and displays the search result list information on the screen.

Thus, the TV 100 extracts keywords corresponding to the specific region and performs a search using the extracted keywords.

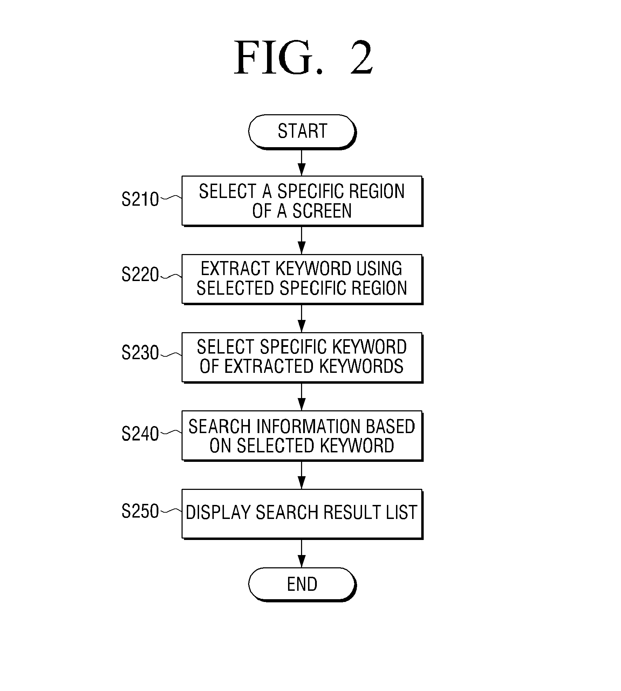

Hereinafter, a method of providing a search service to extract a keyword in a specific region will be explained with reference to FIG. 2. FIG. 2 is a flow chart illustrating a method of providing a search service according to an exemplary embodiment.

The TV 100 selects a specific region in a partial region of a screen according to a user's manipulation (S21 0). For example, if a specific point of the screen is selected by the user, the TV 100 may select a region having a preset area including a corresponding specific point as the specific region. The TV selects the specific region through a user's various manipulations. In addition, the TV 100 may select an entirety of the screen as the specific region.

The TV 100 extracts a keyword using the selected specific region (S220). The TV 100 extracts the keyword using the selected specific region via various methods and algorithms.

More specifically, in the case where the TV 100 is currently displaying video contents, the TV 100 image-processes an image being displayed in the selected specific region and extracts information corresponding to the processed image. For example, in the case where the image being displayed in the selected specific region is a face of a person, the TV 100 recognizes the face included in the specific region through a face recognition method. The controller 180 extracts a name, affiliation or the like of the corresponding person as the keyword. For example, in the case where the face included in the specific region is the face of 'Park Jisung', the TV extracts 'Park Jisung', 'Manchester United', 'Korea' or the like as the keyword. Alternatively, in the case where the TV 100 is currently displaying video contents, the TV 100 may extract the keyword based on information of an image currently being displayed. For example, the TV 100 may extract a title of the image currently being displayed as the keyword. In the case where the TV 100 is currently displaying a webpage screen, the TV extracts the keyword based on webpage contents of the webpage screen included in the selected specific region.

More specifically, in the case where text content of a webpage is included in the selected specific region, the TV 100 extracts a text of the webpage within the selected specific region and extracts the keyword using the extracted text. For example, the TV 100 may select a word which has a large number of repeat frequencies, a word indicated by a bolded character, or a word indicated by a large character out of the extracted texts as the keyword.

Alternatively, in the case where an image of a webpage is in the selected specific region, the controller 180 processes the image of the webpage within the selected specific region to extract information associated with the image and extracts the keyword using the extracted image-associated information.

Then, a specific keyword is selected from the extracted keywords according to a user's manipulation (S230). The TV 100 searches for the information based on a keyword of the extracted plurality of keywords selected by a user (S240). In this case, the TV 100 displays a keyword list on the screen for the user to select the keyword.

At this time, the TV 100 may extend a keyword input region of the search window to display the keyword list. More specifically, the keyword list may be displayed in a type that the keyword input region is extended in an upward direction. In addition, the TV 100 may control to display the list for the plurality of keywords in the periphery of the region in which the specific manipulation is input.

Thus, if a user's desired keyword is selected from the indicated keyword list, the TV 100 performs a search using the selected keyword.

The TV 100 may select the keyword and search for information on the selected keyword through a variety of user inputs. More specifically, the TV 100 may search for the information on the selected keyword using a voice recognition device. For example, if a keyword to be selected from the keyword list is highlighted and a voice "search or retrieve" is recognized through the voice recognition device, the TV 100 searches for information on the highlighted keyword. Also, if a keyword to be selected from the keyword list is recognized by the voice recognition device, the TV 100 may search for the information on the keyword recognized by the voice recognition device.

According to another exemplary embodiment, the TV 100 may search for information on a selected keyword through the remote controller 175. For example, if a keyword to be selected from the keyword list is highlighted and a 'search' button included in the remote controller 175 is pressed, the TV 100 may search for information on the highlighted keyword. According to still another exemplary embodiment, if the remote controller 175 is a touch remote controller, a keyword may be selected using a search graphical user interface (GUI) displayed on the touch remote controller and then information on the selected keyword may be searched for.

In the above exemplary embodiments, as a method for selecting a keyword and searching for information, the voice recognition device or the remote controller is used. However, this is merely an example and various input devices such as a mouse, a touch screen, and pointing device may be used to select the keyword and search for the information.

In addition, the TV 100 automatically selects a specific keyword of the extracted plurality of keywords and searches for information based on the selected keyword. In the case where the keyword is automatically selected, the TV 100 selects the keyword based on a specific standard. For example, the TV 100 may select the keyword which has top keyword priority. The TV 100 searches for information via the communication unit 160 using the extracted and selected keyword. More specifically, the TV 100 transmits a search query to a search engine server using the extracted keyword. Then, the TV 100 receives search result list information from the search engine server and displays the search result list information on the screen.

If the above information search is terminated, the TV 100 displays a search result list according to the search termination in the search window (S250).

Through the above process, the TV 100 extracts keywords corresponding to the specific region and performs a search using the extracted keywords. Accordingly, a user can input the desired keyword by only having to input a manipulation for selection of the specific region on the screen without requiring an additional keyword input procedure.

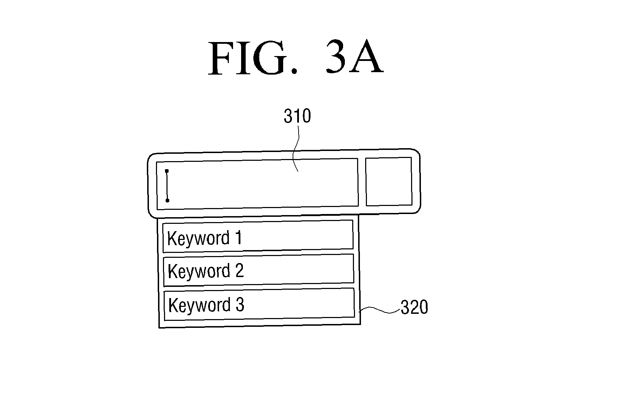

Hereinafter, a case where a keyword input region of a search window is extended to indicate a keyword list will be explained with reference to FIGS. 3A to 3D. FIGS. 3A to 3D are views illustrating that a keyword extracted based on a selected specific region is indicated in a search keyword input region according to an exemplary embodiment.

FIG. 3A is a view illustrating a state that a keyword input region 310 is extended to display a keyword list 320. As illustrated in FIG. 3A, the TV 100 may extend a bottom part of the keyword input region 310 to display the keyword list 320 associated with the selected specific region in the keyword input region 310. The keyword list 320 includes keywords extracted based on the selected specific region.

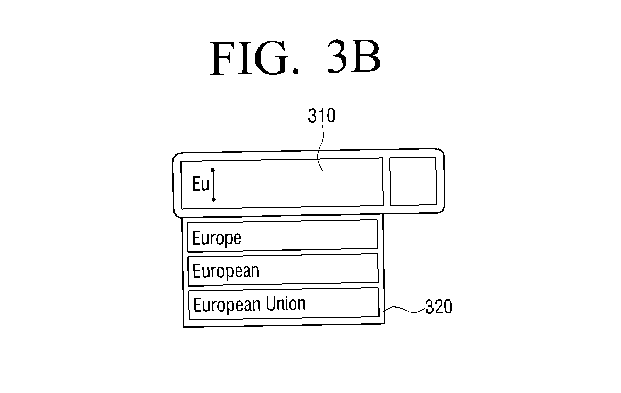

Alternatively, as illustrated in FIGS. 3B to 3D, the TV 100 may display a keyword list suitable to a character according to the characters input in the keyword input region 310.

FIG. 3B illustrates a keyword list 320 indicated in the state that a character 'Eu' is input in a keyword input region 310. As illustrated in FIG. 3B, in case of a state that the character 'Eu' is input in the keyword input region 310, the TV 100 displays keywords that begins with 'Eu' of the keywords associated with the specific region in the keyword list 320.

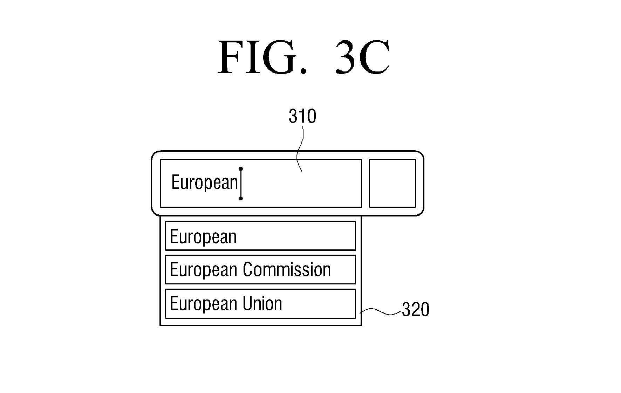

FIG. 3C illustrates a keyword list 320 indicated in the state that characters 'European' are input in a keyword input region 310. As illustrated in FIG. 3C, in case of a state that the characters 'European' are input in the keyword input region 310, the TV 100 displays keywords including 'European' of the keywords associated with the specific region in the keyword list 320.

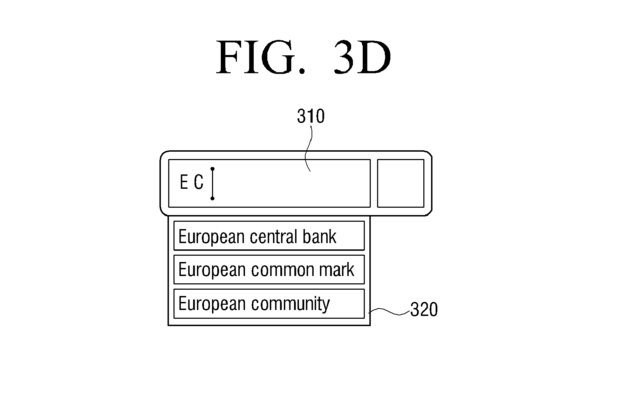

FIG. 3D illustrates a keyword list 320 indicated in the state that characters 'E C' are input in a keyword input region 310. As illustrated in FIG. 3D, in case of a state that the characters 'E C' are input in the keyword input region, the TV 100 displays keywords including a word of which an initial consonant are 'E C' of the keywords associated with the specific region in the keyword list 320.

Thus, the TV 100 may select keywords to be displayed in view of characters input in the keyword input region 310 out of the keywords extracted based on the specific region.

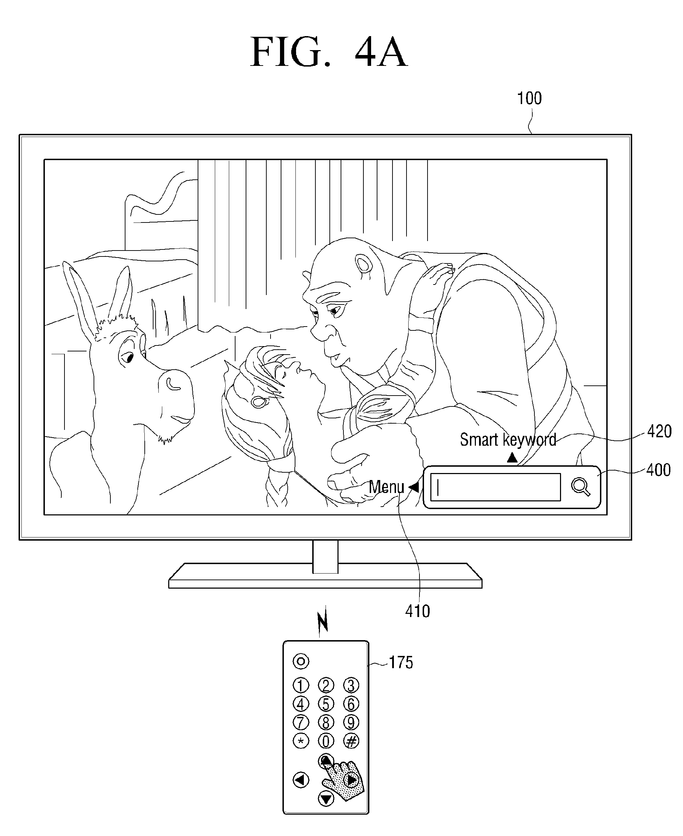

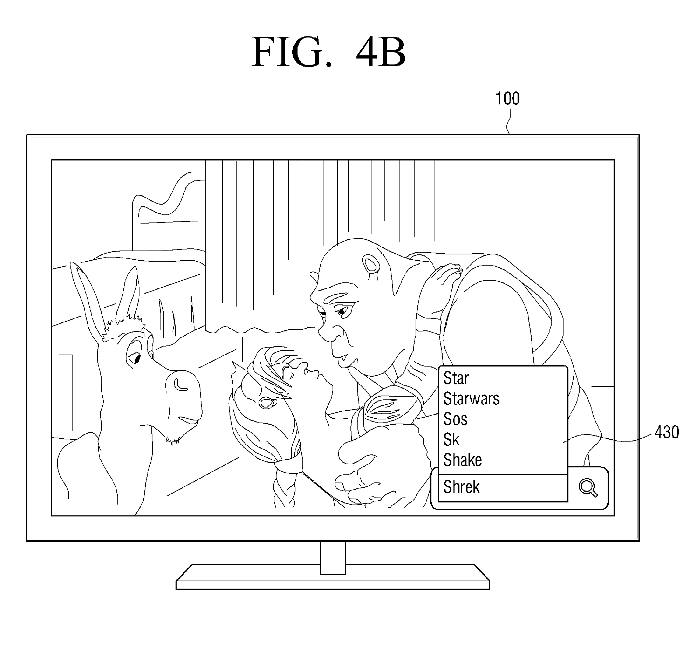

FIGS. 4A and 4B illustrate a case where title information of an image being displayed is extracted as a keyword according to an exemplary embodiment.

FIG. 4A illustrates a state that a search window 400 is displayed, while the TV 100 is displaying an image. In addition, a menu icon 410 is indicated in the left of the search window 400 and a keyword list indication icon 420 is indicated above the search window 400.

In the case where a key for a left direction in the remote controller 175 is input in a state that the search window 400 is selected, the TV 100 displays a menu associated with the search window 400. In the case where a key for a right direction in the remote controller 175 is input in a state that the search window 400 is selected, the TV 100 recognizes that the keyword list indication icon 420 is selected and displays a keyword list 430 in a top part of the keyword input region as illustrated in FIG. 4B.

At this time, the TV 100 sets the entirety of a screen as a specific region and uses a title of an image being displayed as a keyword. Accordingly, as illustrated in FIG. 4B, the TV 100 automatically inputs 'Shrek' as the keyword in a keyword input region of the search window 400 and automatically performs a search using 'Shrek' as the keyword.

Thus, the TV 100 may set the entirety of the screen as the specific region and automatically selects the title of the image being displayed as the keyword.

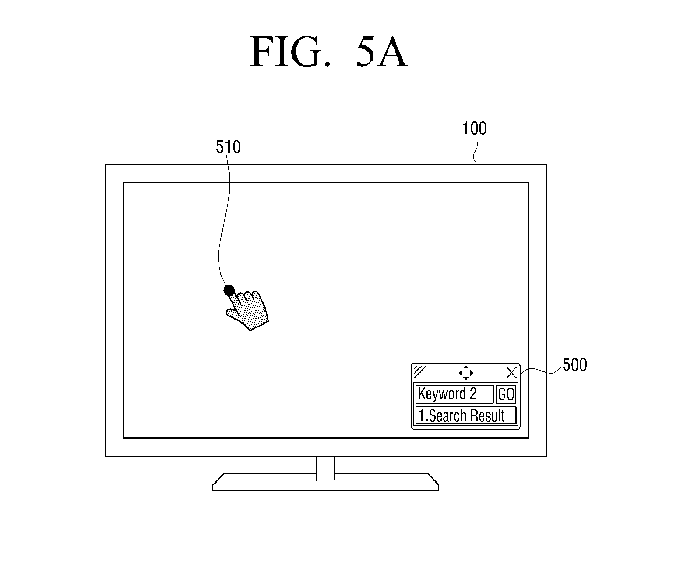

FIGS. 5A to 5D are views illustrating a process of selecting a partial region of a screen as a specific region using a touch manipulation.

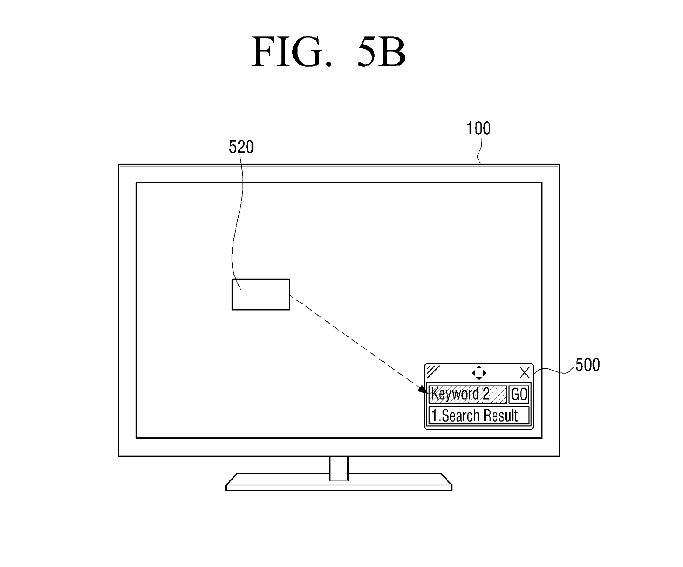

FIG. 5A is a view illustrating a state that a search window 500 is indicated on the TV 100. As illustrated in FIG. 5A, if a specific point 510 is long-touched by a user, the TV 100 selects a specific region 520 including the specific point 510 as illustrated in FIG. 5B.

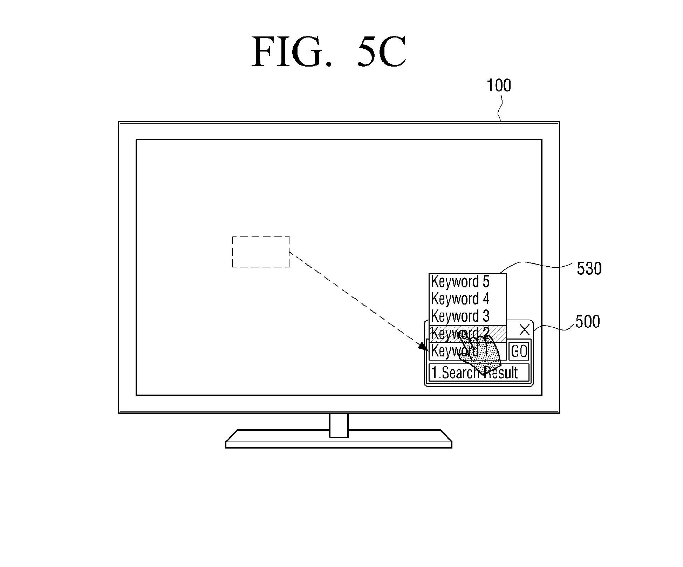

Afterward, as illustrated in FIG. 5C, the TV 100 extends a keyword input region to display a keyword list 530. Herein, keywords included in the keyword list 530 correspond to keywords associated with the specific region.

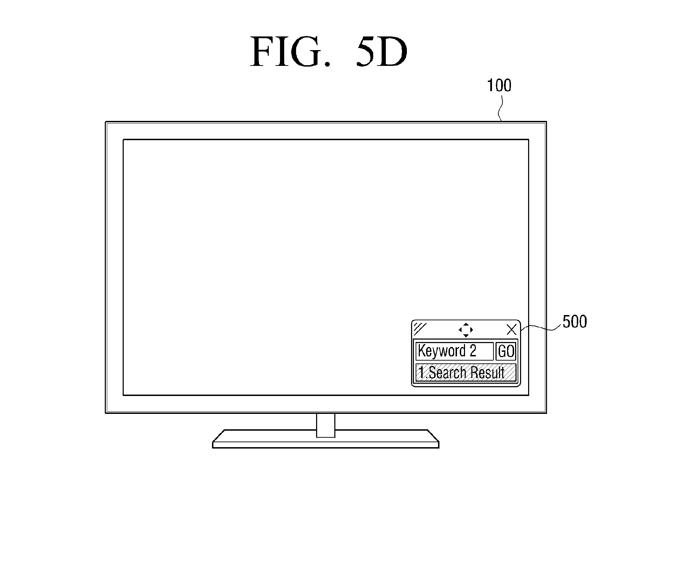

Then, as illustrated in FIG. 5D, the TV 100 inputs 'Keyword 2' in the keyword input region of the search window 500.

As above, if a long-touch manipulation is input on the screen, the TV 100 selects a region having a specific area including a point at which the long-touch manipulation is input. Then, the TV 100 extracts a keyword associated with the selected specific region and performs a search using the extracted keyword. Accordingly, a user can easily perform keyword input and perform by only inputting the long-touch manipulation.

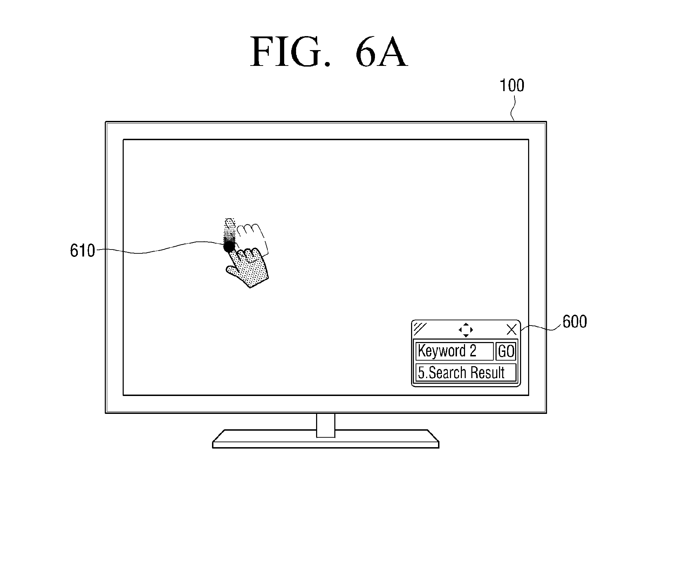

FIGS. 6A to 6D are views illustrating a process of selecting a partial region of a screen as a keyword using a touch and drag touch manipulation according to an exemplary embodiment.

FIG. 6A is a view illustrating a state that a search window 600 is indicated on the TV 100. As illustrated in FIG. 6A, if a touch and drag touch manipulation is input in a specific point 610 in a downward direction by a user, the TV 100 selects a specific region including the specific point 610.

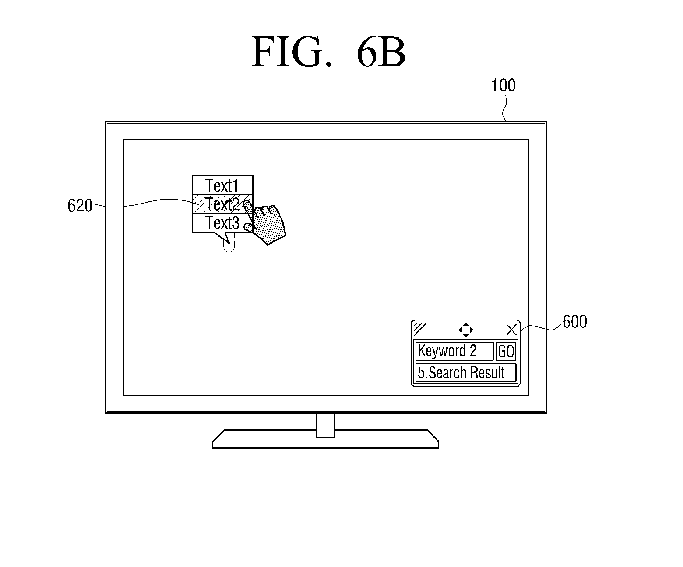

Afterward, as illustrated in FIG. 6B, the TV 100 displays a keyword list 620 around the specific point 610 at which user's touch and drag touch manipulation is input. Herein, keywords included in the keyword list 620 correspond to keywords associated with the specific region including the specific point 610 at which the touch and drag touch manipulation is input. In particular, as illustrated in FIG. 6B, the TV 100 displays the keyword list 620 at the specific point 610 at which the touch and drag touch manipulation is input.

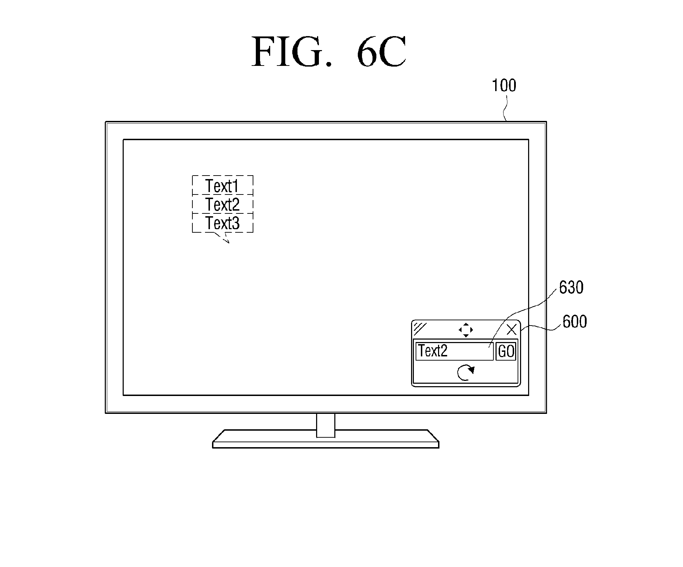

If 'Text 2' is selected in the keyword list 620 as illustrated in FIG. 6B, the TV 100 selects the 'Text 2' as a keyword as illustrated in FIG. 6C. Accordingly, as illustrated in FIG. 6C, the TV 100 inputs the 'Text 2' in a keyword input region 630 of the search window 600 as the keyword.

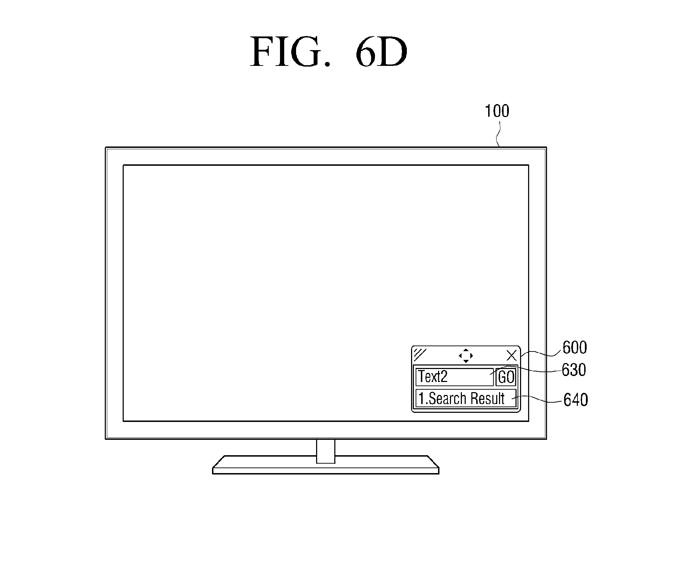

At this state, if a command for performing a search is input by a user, the TV 100 performs a search for information associated with the 'Text 2'. Then, as illustrated in FIG. 6D, the TV 100 displays a search result in a search result indication region 640.

Thus, if the touch and drag touch manipulation is input on the screen, the TV 100 selects a region having a specific area including a point at which the touch and drag touch manipulation is input. The TV extracts a text in the selected specific region and extracts the keyword associated with the extracted text. The TV 100 performs a search using the extracted keyword. Accordingly, a user can easily perform keyword input and search by only inputting the touch and drag touch manipulation.

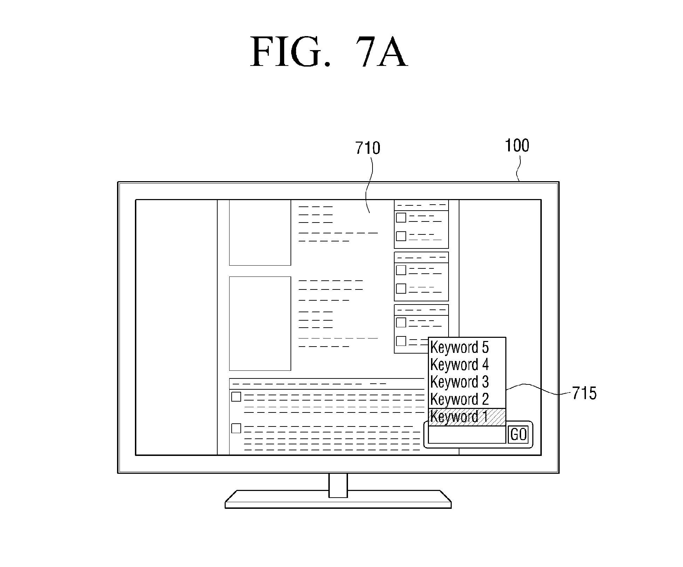

FIGS. 7A to 7D are views illustrating various cases where the entirety or a partial region of a screen is selected as a specific region according to an exemplary embodiment. FIG. 7A is a view illustrating a case where an entire screen 710 of website is selected as a specific region. As illustrated in FIG. 7A, the TV 100 may select the entire screen 710 of the website as the specific region. The TV 100 extracts a keyword in the entire screen 710 of the website and extends a keyword input region of a search window to display the extracted keyword list 715.

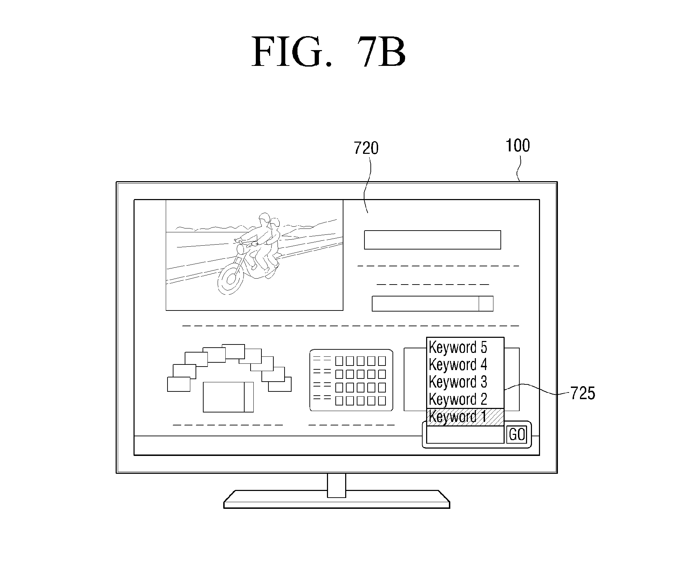

As illustrated in FIG. 7B, if a partial region 720 of the website is displayed on a screen, the TV 100 selects the partial region 720 of the website being displayed on the screen as a specific region. The TV 100 extracts a keyword in the partial region 720 of the website and displays a search list 725 for the extracted keyword in a top part of a keyword input region of a search window.

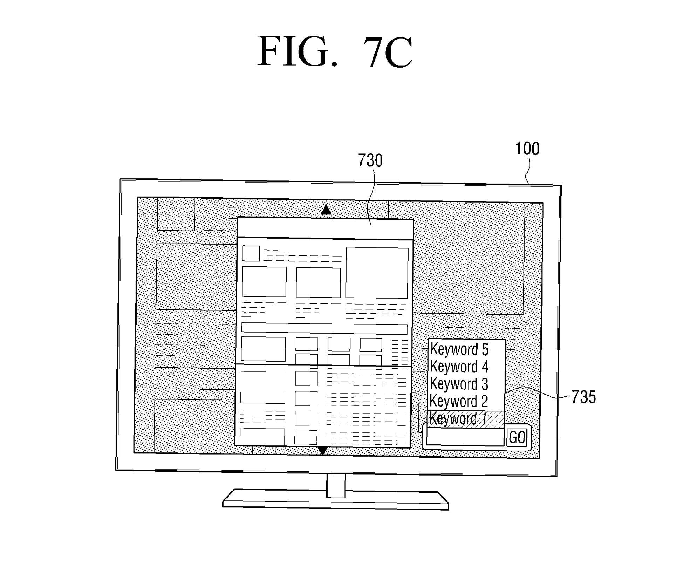

FIG. 7C illustrates that the TV 100 sets a partial region of a screen as a specific region. As illustrated in FIG. 7C, if the partial region 730 of the screen is set as the specific region, the TV 100 extracts a keyword in the partial region 730 of the screen which is set as the specific region. Then, the TV 100 displays a keyword list 735 for the extracted keyword in a top part of a keyword input region of a search window.

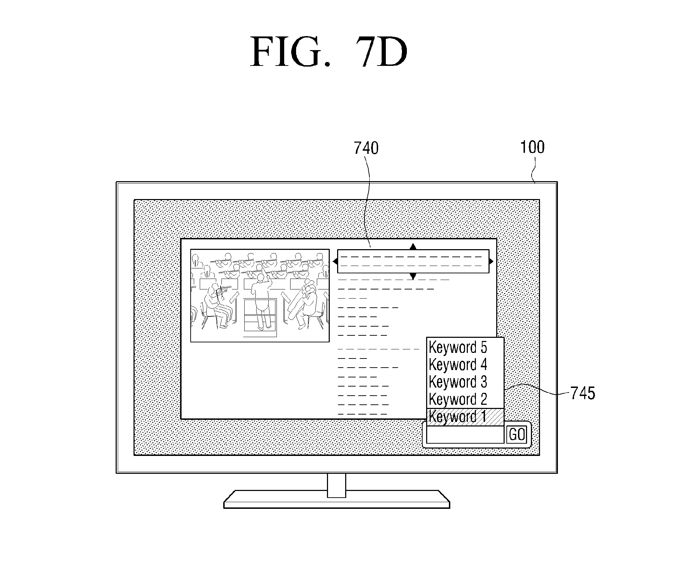

FIG. 7D illustrates that the TV sets a partial text region 740 displayed on a screen as a specific region. As illustrated in FIG. 7D, if the partial text region 740 of the screen is set as the specific region, the TV 100 extracts a key word in the partial text region 740 which is set as the specific region. Then, the TV 100 displays a keyword list 745 for the extracted keyword in a top part of a keyword input region of a search window.

Thus, the TV 100 may select various kinds of specific regions. Accordingly, a user can select various kinds of specific regions to extract a suitable search word.

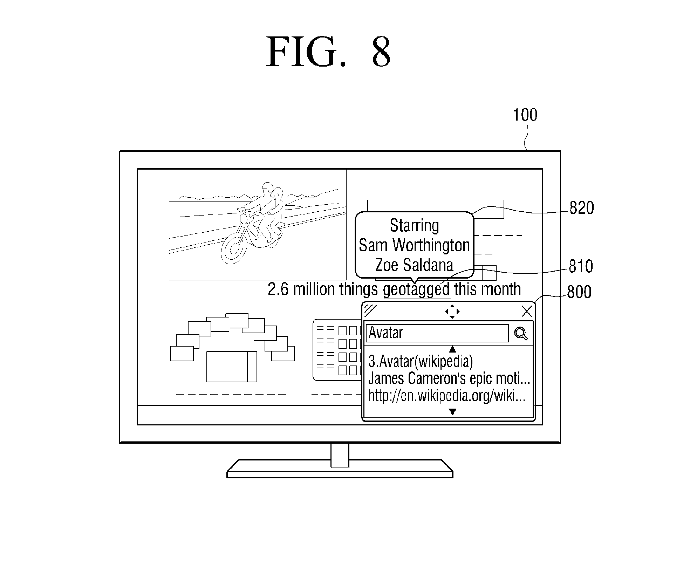

FIG. 8 is a view illustrating a case of displaying an association recommendation keyword list associated with a word displayed on a screen. As illustrated in FIG. 8, a search result for 'Avatar' is shown in a search window 800.

In addition, a word which is 'geotagged' (810) is included in a screen of FIG. 8. lf 'geotagged' (810) is selected by a user, the TV 100 displays a keyword list 820 associated with 'geotagged' (810) on the screen in a popup type.

Thus, the TV 100 generates a keyword list 820 including keywords associated with a text displayed on the screen. Accordingly, a user can select a desired keyword from the keyword list 820 for a word existing in the screen of the TV 100.

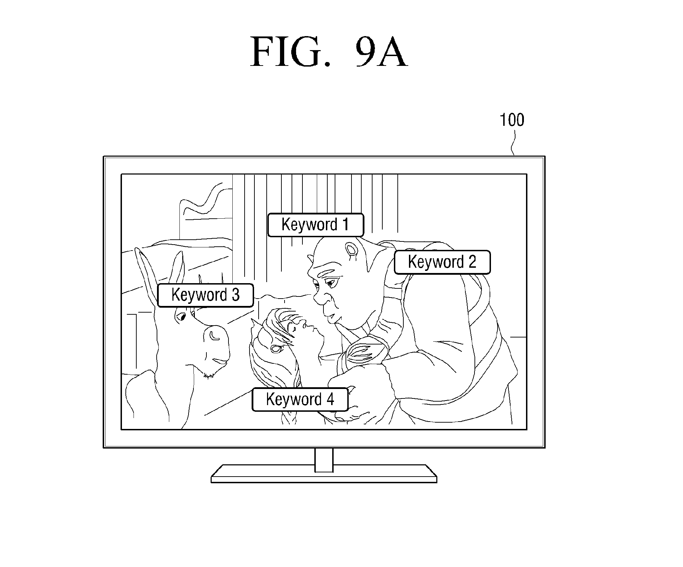

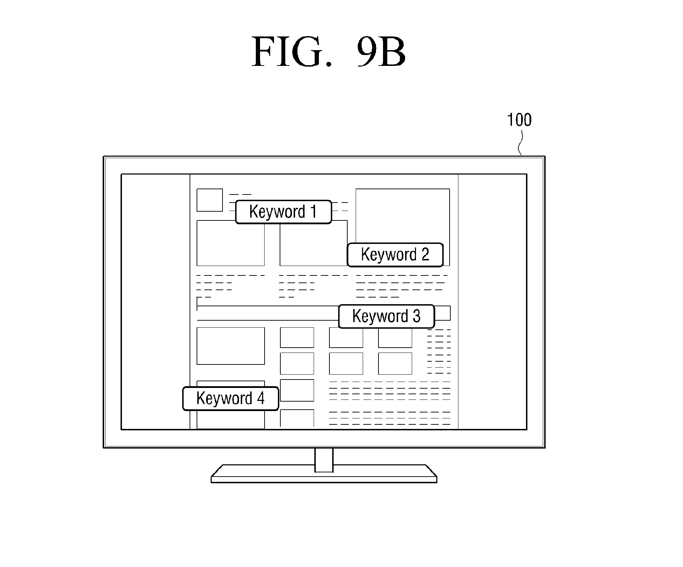

FIGS. 9A and 9B are views illustrating a case where a keyword is indicated on a screen according to an exemplary embodiment. FIG. 9A is a view illustrating a screen which displays an image. As illustrated in FIG. 9A, it can be confirmed that the TV 100 displays keywords from Keyword 1 to Keyword 4 on a screen as popup. Herein, a position at which the keyword is indicated corresponds to a region in which a corresponding keyword is extracted.

FIG. 9B is a view illustrating a screen which displays web browser. As illustrated in FIG. 9B, it can be confirmed that the TV 100 displays keywords from Keyword 1 to Keyword 4 on the screen as popup. Herein, a position at which the keyword is indicated corresponds to a region in which a corresponding keyword is extracted.

Thus, the TV 100 can extract a keyword in the specific region and perform a search using the extracted keyword as illustrated in FIGS. 9A and 9B. Accordingly, a user can input a search keyword by only having to select a region without having to input a separate character.

In addition, in the exemplary embodiment, even though the TV is illustrated as a display device, any display device which can perform an Internet search function other than the TV may be used. For example, the inventive concept can be applied to a display device such as a mobile phone, a portable multimedia player (PMP) a moving picture experts group audio layer-3 (MP3), and the like.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing a search service, the method comprising: selecting a specific region of a screen;
extracting a keyword using the selected specific region; and
searching for information using the extracted keyword.

2. The method as claimed in claim 1, wherein the extracting comprises extracting a plurality of keywords using the selected specific region, and
wherein the searching comprises searching for the information based on a keyword of the plurality of keywords selected by a user.

3. The method as claimed in claim 1 or 2, wherein the extracting includes extracting a plurality of keywords using the selected specific region, and
wherein the searching comprises:
automatically selecting a specific keyword of the plurality of keywords; and
searching for the information based on the selected specific keyword.

4. The method as claimed in any one of claims 1 to 3, wherein the selecting comprises selecting an entirety of the screen as the specific region.

5. The method as claimed in any one of claims 1 to 3, wherein the selecting comprises selecting a partial region of the screen as the specific region by user manipulation.

6. The method as claimed in any one of claims 1 to 5, further comprising displaying a webpage screen,
wherein the extracting comprises extracting the keyword based on webpage content of the webpage screen included in the selected specific region.

7. The method as claimed in claim 6, wherein the extracting comprises extracting a text in a webpage included in the selected specific region and extracting the keyword using the extracted text.

8. The method as claimed in any one of claims 1 to 5, further comprising displaying an image,
wherein the extracting comprises extracting the keyword based on information of the image being displayed.

9. The method as claimed in claim 8, wherein the extracting comprises extracting title information of the image as the keyword.

10. The method as claimed in any one of claims 1 to 9, wherein the searching comprises:
transmitting a search query to a search engine server using the extracted keyword;
receiving search result list information from the search engine server; and
displaying the search result list information on the screen.

11. A display device comprising:
a communication unit which is communicably linked to an external server which provides a search service; and
a controller which selects a specific region of a screen, extracts a keyword based on the selected specific region, and searches for information via the communication unit based on the extracted keyword.

12. The display apparatus as claimed in claim 11, wherein the controller extracts a plurality of keywords using the selected specific region, and searches for the information based on a keyword of the plurality of keywords selected by a user.

13. The display apparatus as claimed in claim 11 or 12, wherein the controller extracts a plurality of keywords using the selected specific region, automatically selects a specific keyword of the plurality of keywords, and searches for the information based on the selected specific keyword.

14. The display apparatus as claimed in any one of claims 11 to 13, wherein the controller selects an entirety of the screen as the specific region.

15. The display apparatus as claimed in any one of claims 11 to 13, wherein the controller selects a partial region of the screen according to a user manipulation.
